# EUROPEAN PATENT APPLICATION

(11) **EP 1 202 277 A1**
(43) Date of publication of application: **02.05.2002**
(21) Application number: 00948319.9
(22) Date of filing: 28.07.2000
(51) Int. Cl.: G11B 23/087

(54) **MAGNETIC TAPE CASSETTE**

(30) Priority: 30.07.1999 JP 21731899
(71) Applicant: FUJI PHOTO FILM CO., LTD., Kanagawa-ken, 250-0193 (JP)
(72) Inventor: MORITA, Kiyoo, Fuji Photo Film Co., Ltd., Odawara-shi, Kanagawa 250-0001 (JP); NAKANE, Takanobu, Fuji Photo Film Co., Ltd., Odawara-shi, Kanagawa 250-0001 (JP)
(74) Representative: Klunker . Schmitt-Nilson . Hirsch
(86) International application number: JP0005110
(87) International publication number: WO0109894

(57) **Abstract**

A magnetic tape cassette has a pair of take-up hubs wound with a magnetic tape and a cassette case containing the hubs and made up of upper and lower halves with sheets between the hubs and the halves. At least one side of each of the sheets is impregnated with an antistatic agent by the amount of 2.0 x 10⁻⁵ mg/mm² to 1.5 x 10⁻⁴ mg/mm². A buffering member for holding or imparting a shape-imparting effect is attached by means of adhesive to a portion of each sheet where a shape-imparting part for defining the position in the direction of height of the take-up hubs is provided or to be provided. Thus, the surface electric resistance of the sheet is small. The antistatic agent is not transferred to the magnetic tape in a harsh environment of high temperature and high humidity. The tape can run stably even after transportation and storage in such a harsh environment. The position of the magnetic tape in the direction of the height of the take-up hubs is controlled, and the position where the magnetic tape runs is reliably and precisely retained.

## Description

### TECHNICAL FIELD

The present invention relates to a magnetic tape cassette. More particularly, the present invention relates to a magnetic tape cassette in which a friction sheet (hereinafter simply referred to as a sheet) is improved interposed between takeup hubs and a cassette casing for adjusting a running position of a magnetic tape wound around the takeup hubs, and more specifically to a magnetic tape cassette in which an amount of charge preventing agent to be impregnated into the sheet arranged on the cassette casing inner wall is determined.

### BACKGROUND ART

As well known, in a magnetic tape cassette, an elongated magnetic tape is wound around takeup hubs and the takeup hubs around which the magnetic tape is wound are rotatably accommodated in a cassette casing.

In case of a two-reel type magnetic tape cassette such as a DDS, end portions of the elongated magnetic tape are respectively fixed to a pair of takeup hubs, the magnetic tape is wound, around the respective takeup hubs from the both end portions thereof, the pair of takeup hubs around which this magnetic tape is wound, is rotatably accommodated in the cassette casing constituted by coupling an upper half and a lower half in a lid alignment manner, the magnetic tape between the pair of takeup hubs is suspended through a predetermined path, and the magnetic tape corresponding to the position of a magnetic head of a recording/reproducing apparatus such as a tape deck (hereinafter simply referred to as a recording/reproducing apparatus) is tensioned and exposed so that only the tensioned part of the magnetic tape may be exposed toward the outside. A front cover (lid) pivoted rotatably between a closed position for covering the magnetic tape suspended between the pair of takeup hubs for protecting a magnetic layer surface of the magnetic tape and an open position for exposing the magnetic tape from the casing is provided in the upper half of this cassette casing.

When the magnetic tape cassette is loaded into the recording/reproducing apparatus so called, deck, the above-described front cover is rotated to the open position in cooperation with the loading by a mechanism within the deck so that the magnetic tape suspended between takeup hubs is exposed from the casing. Then, when the takeup hubs are rotated, the magnetic tape runs, and the magnetic head within the deck is abutted on the magnetic tape thereby recording information onto the magnetic tape or reproducing the information from the magnetic tape.

The takeup hubs and the magnetic tape wound around those takeup hubs are accommodated through sheets (friction sheets) within a box-shaped cassette casing composed of an upper half and a lower half, which is provided to hold and protect the magnetic tape to be rotated together with the takeup hubs and to ensure stable running of the tape. The sheet, particularly the lower sheet interposed between the lower half and the magnetic tape, functions not only to hold and protect the magnetic tape but also to decrease the sliding resistance generated when the takeup hubs are rotated, thereby allowing smooth rotation. In the case where a shaped portion is provided in the sheet, the sheet also serves as supporting the takeup hubs around which the magnetic tape is wound to limit the height thereof.

Elasticity is required for this sheet (friction sheet) in order to have the slidability and hold the magnetic tape. Therefore, in general, a sheet is made of, for example, high density PE (polyethylene). Therefore, the electric resistance of the sheet itself is very great at about 10¹⁶Ω. Accordingly, the sheet itself is likely to be charged due to the contact or sliding contact between the sheet and the cassette inner wall, the magnetic tape or the takeup hubs, and thus dust easily adheres thereto. This problem become more serious when the magnetic tape is brought into sliding contact with the sheet by generating the peel charge.

In order to overcome the above-noted problem by lowering the electric resistance of the sheet itself, a method may be proposed in which the sheet is impregnated with a charge preventing agent such as a mixture including four-class ammonium salt, for example, thereby reducing the surface electric resistance to about 10⁹ to 10¹²Ω.

On the other hand, recently, the magnetic tape cassette containing the above-described sheet has been used over worldwide and its use condition, the transportation distance and the like have become diverse. Therefore, the magnetic tape cassette may be transported, stored or used under severe conditions such as high temperature and high moisture right on the equator, for example. Even under such environments, higher level of quality guarantee may be demanded than ever.

Incidentally, in general, the affinity between polyethylene that is the material of the sheet and the charge preventing agent is not splendid. Therefore, when the magnetic tape cassette is transported, stored or used under such severe conditions, there is a possibility that the charge preventing agent impregnated on the surface of the sheet absorbs moisture and would be transferred to the magnetic tape to cause a problem of giving adverse effect to the tape running.

On the other hand, when the magnetic cassette tape is loaded into the deck, if the magnetic tape is moved up and down when the magnetic tape runs, the magnetic tape is not correctly brought into contact with the magnetic head and thus correct recording/reproducing is impossible. This may also cause other defects. Accordingly, it is important to suppress the up-and-down movement of the magnetic tape when the tape runs to enhance precision of limiting the running position of the magnetic tape and to obtain stable running.

Therefore, conventionally, there have been various approaches to adjust the running position of the magnetic tape.

For example, conventionally, in a magnetic tape cassette using flangeless type takeup hubs, ribs (convex thick portions) are provided on a portion of the lower half receiving the takeup hubs, the sheet is intervened between the takeup hubs around which the magnetic tape is wound and the lower half, or the sheet is provided with the shaped portion (draw) thereby limiting the running position (height) of the magnetic tape by the height of the shaped portion.

A material that may be subjected to the shaping and is suitable for the sliding movement with the magnetic tape is limited to a high molecular such as PE or PET. However, they have a disadvantage that the shaped portion is likely to be deformed by a shock load or the like. Therefore, it is possible to propose use of a fluorine sheet including those containing Teflon or carbon as the material that is strongly resistant against deformation.

In case of the fluorine sheet including those containing Teflon or carbon, when attempting to provide the shaped portion, the bent portions are cut off to form edges. This gives damage to the edge of the magnetic tape. Accordingly, it is difficult to perform the shaping.

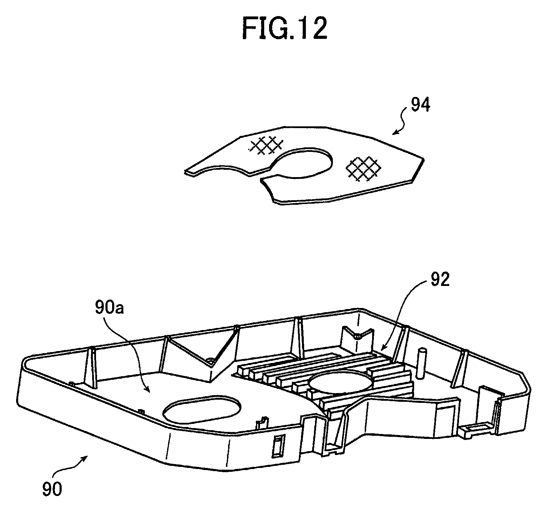

Accordingly, conventionally, as shown in Fig. 12, in the sheet such that the shaping is difficult, ribs (convex) 92 to which the sheet is attached are provided on a bottom surface 90a of the lower half 90 of the magnetic tape cassette and the sheet 94 is attached to the ribs 92.

However, the above-described conventional tape running position limiting method has the following problems.

Namely, in the case where the convex shape for limiting the magnetic tape running position is formed using the ribs provided on the portion of the lower half, the weight of the molded article is increased and a structure in which the thickness is not uniform, is obtained, thereby causing the molding fault resulting in problems such as deformation due to the difference of molding shrinkage.

Also, in the case where the sheet is interleaved and the shaped portions are formed on the sheet thereby performing positional limitation based on the height of the shaped portions, there is a limit of the height of the shaped portion. In addition, if this height is too high, it is impossible to support the weight of the magnetic tape by the shaped portions. Deformation is caused due to drop shock or vibration during the transportation. There is a problem that it becomes difficult to control the position of the magnetic tape.

Furthermore, in the method that the sheet in which the shaping is difficult is attached to the ribs (convex for attaching the sheet) of the lower half, creases are generated when the sheet is attached thereto. While the magnetic tape is running, the edge of the magnetic tape is brought into contact with the creases to cause a problem of a defect such that the edge of the magnetic tape is damaged.

### DISCLOSURE OF INVENTION

This invention is invented in view of the above conventional problem. An amount of charge preventing agent impregnated into a sheet is limited. The first object of this invention is that even under severe conditions such as high temperature and high humidity condition, the charge preventing agent on the sheet can not be transferred to a magnetic tape, so that a magnetic tape cassette is provided such that a tape can stably run.

Further, the second object of this invention is that a takeup hub of a magnetic tape is restricted as to a position in a vertical direction of the hub, so that a magnetic tape cassette is provided such that a running position of the tape can accurately and surely be maintained.

In order to attain the first object, the inventors found out that an amount of the charge preventing agent corresponding to a unit area may be limited within a constant area. Thus, a surface electric resistance value is within an allowable area without changing kinds of a sheet and/or a charge preventing agent and without transferring the charge preventing agent on sheet to a magnetic tape even under severe conditions such as high temperature and high humidity condition.

In the first aspect of the present invention, a magnetic tape cassette is provided, having a box-shaped cassette casing formed by coupling an upper half and a lower half in a lid alignment manner; a takeup hub which is rotatably retained within the cassette casing and around which a magnetic tape is wound; and a sheet to be interposed between an inner wall surface of at least one of the upper half and the lower half of the cassette casing and the magnetic tape wound around the takeup hub, and impregnated with charge preventing agent at 2.0 x 10⁻⁵ mg/mm² to 1.5 x 10⁻⁴ mg/mm² on at least one surface thereof.

Therein, preferably the sheet is a sheet interposed at least between the magnetic tape wound around the takeup hub and the inner wall surface of the lower half.

Therein, preferably an impregnation amount of the charge preventing agent into the sheet being defined by at least one of a UV spectral method and a gas chromatographic method.

In the second aspect of the present invention, a magnetic tape cassette is provided, in which a pair of takeup hubs around which a magnetic tape is wound is received in a cassette casing formed by coupling an upper half and a lower half in a lid alignment manner and sheets are interposed between the takeup hubs and the upper half and the lower half, respectively, a buffer member for keeping and giving a shaping effect being bonded by bonding means to at least one of the sheets in a portion provided with a shaped portion for limiting a position of the takeup hubs in a height direction or in a portion where the shaped portion is to be provided.

### BRIEF DESCRIPTION OF THE DRAWINGS

Fig. 1 is an exploded perspective view showing a schematic structure of one embodiment of a magnetic tape cassette according to the present invention.
Fig. 2 is an exploded perspective view showing a magnetic tape that is to be received in the magnetic tape cassette according to the present invention and wound around takeup hubs and sheets to be interposed between halves and the magnetic tape.
Fig. 3 is a graph showing a correlation between a light absorbance at a wavelength of 210 nm and an impregnation amount of charge preventing agent in a UV spectral method that is one of methods to limit the impregnation amount of the charge preventing agent to the sheet to be received in the magnetic tape cassette according to the present invention.
Fig. 4 is a cross-sectional view taken along the line III-III of the sheet shown in Fig. 2.
Fig. 5 is a perspective view showing an example of a sheet provided with shaped portions according to the present embodiment.
Fig. 6 is a perspective view taken along the line V-V of Fig. 5.
Fig. 7 is a cross-sectional view of the sheet material that is difficult to shape corresponding to Fig. 6.
Fig. 8 is a perspective view showing an example of a sheet provided with another shaped portions according to the present embodiment.
Fig. 9 is a cross-sectional view taken along the line VIII-VIII of Fig. 8.
Fig. 10 is a cross-sectional view of a sheet material that is difficult to shape corresponding to Fig. 8.
Fig. 11 is an exploded perspective view showing an example of another magnetic tape cassette according to the present invention.
Fig. 12 is a perspective view showing a state in which a conventional sheet material that is difficult to shape is attached to a lower half.

### BEST MODE FOR CARRIYING OUT THE INVENTION

A magnetic tape cassette according to the present invention will be described in detail on the basis of the preferred embodiments shown in the accompanying drawings.

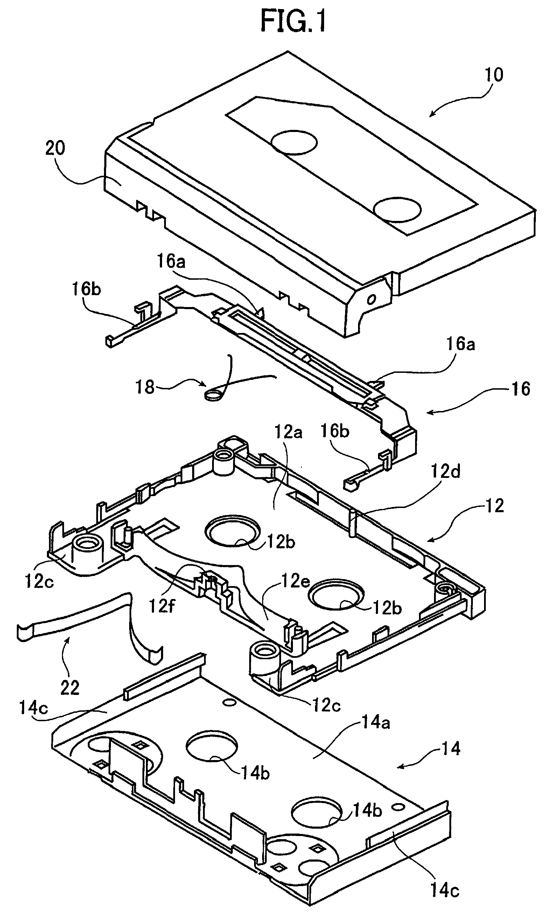

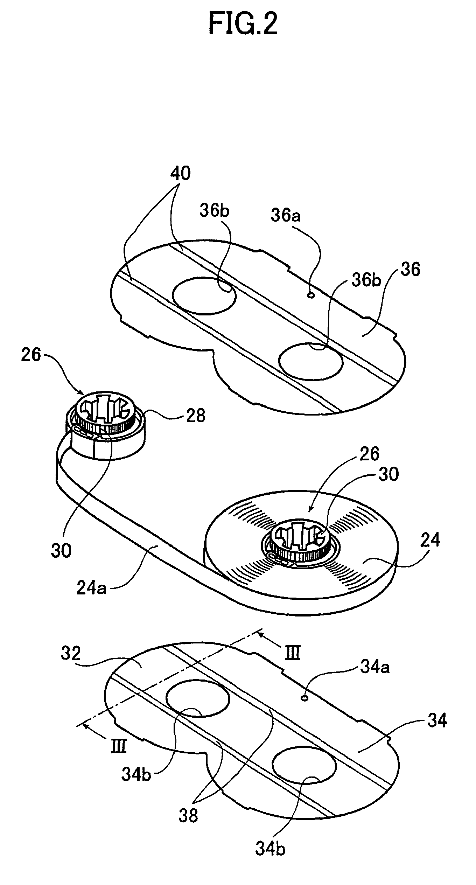

Fig. 1 is an exploded perspective view showing a schematic structure of one embodiment of a two-reel type magnetic tape cassette that is one embodiment mode of a magnetic tape cassette according to the present invention. Fig. 2 is an exploded perspective view showing a magnetic tape wound around takeup hubs, which is to be received in the magnetic tape cassette, and sheets (friction sheets) to be interposed between halves and the magnetic tape.

In the example described above, a two-reel type magnetic tape cassette is exemplified as a magnetic tape cassette. However, it is possible to preferably exemplify as such a cassette a magnetic tape cassette like a DDS, a DAT, a video tape cassette or the like. Also, the magnetic tape cassette according to the present invention is not limited to the two-type magnetic tape cassette but may be a one-reel type magnetic tape cassette.

The magnetic tape cassette shown in Fig. 1 is mainly composed of an upper half 10 and a lower half 12 that are coupled in a lid alignment manner to form a box that becomes a casing (cassette casing) for a magnetic tape, a slider 14 that is provided at the bottom of the lower half 12 from the outside so as to be in contact with a bottom surface thereof and so as to be slidable in a back-and-forth direction, and a magnetic tape 24 (see Fig. 2) wound around takeup hubs 26.

As shown in Fig. 2, in the magnetic tape cassette, both end portions of an elongated magnetic tape 24 are fixed to a pair of takeup hubs 26, 26, the magnetic tape 24 is wound around the respective takeup hubs 26, 26 from its both end portions, the pair of takeup hubs 26, 26 around which the magnetic tape 24 is wound are received rotatably within a cassette casing obtained by coupling the upper half 10 and the lower half 12 in a lid alignment manner, the magnetic tape 24 between the pair of takeup hubs 26, 26 is tensioned through a predetermined path, and the portion 24a of the magnetic tape tensioned between the pair of takeup hubs 26, 26 is tensioned and drawn, which corresponds to the position of the magnetic head of a recording/reproducing apparatus (not shown) so that only the magnetic tape corresponding to this tensioned drawn portion 24a may be exposed to the outside.

In no use of this magnetic tape cassette, in order to prevent the fingers from touching the magnetic layer surface of the tensioned and exposed portion 24a of the magnetic tape 24 that may be exposed from the cassette casing and to protect it against dust that may be attached thereto, a front cover (front surface cover) 20 pivoted by pins is provided in the upper half 10 so as to be swung between the closing position for covering the magnetic tape tensioned and exposed portion 24a and the opening position for exposing it.

A gear 30 is provided integrally on an upper end surface of each takeup hub 26. This gear 30 is engaged with a brake piece 16a of a brake member 16 assembled into the upper half 10 to prevent the rotation of the magnetic tape 24 in a winding loosening direction and to prevent the loosening or slack of the magnetic tape 24 due to vibration, shock or the like exerted during handling or carrying the magnetic tape in no use. A pair of brake pieces 16a is engaged with the gears 30 of the corresponding takeup hubs 26. The brake member 16 is spring biased rearwardly toward the takeup hubs 26 by a brake spring 18 made of torsion coil spring fitted around a pin (not shown) provided in the upper half 10.

In no use of the magnetic tape cassette, this brake member 16 is kept in the stopping position for stopping the rotation of the takeup hubs 26 with the brake pieces 16a being engaged with the gears 30 by the biasing force of the brake spring 18. When the cassette is loaded into the recording/reproducing apparatus, the front cover 20 is rotated by the recording/reproducing apparatus, and elongated brake arms 16b extending forwardly from both right and left ends of the brake member 16 and provided so as to engage the front cover 20 are drawn forwardly. Then, the brake pieces 16a are released from the gears 30. The brake member is moved to the release position, whereby the takeup hubs 26 may be rotated.

The lower half 12 has a bottom surface 12a having a substantially rectangular shape. On the bottom surface 12a, not-shown reel shafts, which support the takeup hubs 26 rotatably, are inserted into the takeup hubs 26 from the recording/reproducing apparatus when the magnetic tape cassette is loaded into the recording/reproducing apparatus, and the reel shafts comprises reel shaft insertion holes 12b, 12b for rotating and driving the takeup hubs 26. Both right and left ends of the bottom surface 12a form the projection portions 12c, 12c extending forwardly. The space between the projection portions 12c, 12c is a space into which a so-called tape loading device provided on the recording/reproducing apparatus (deck) into which the magnetic tape cassette is loaded is advanced.

Also, a wall-like member 12e made up of two divided-sleeve-type ribs provided continuously substantially in a V-shape is provided upright in the bottom surface 12a of the lower half 12. A post-like rib 12f is provided in the central portion on the front side thereof. Then, slider spring 22 using a V-shaped leaf spring for biasing the slider 14 is inserted between this post-like rib 12f and the above-described wall-like member 12e.

The slider 14 has a flat bottom surface 14a provided in contact with the bottom surface 12a of the lower half 12 from below, a pair of reel shaft insertion holes 14b, 14b provided in this bottom surface 14a, and side wall portions 14c, 14c formed on both sides of the bottom surface 14a, which may slidingly move in engagement with sliding grooves (not shown) formed in the lid alignment portions on both side walls of the lower half 12 and the upper half 10, and is slidable back and forth by being guided along the side walls of the lower half 12. Then, the slider 14 is biased and moved forward by the slider spring 22 for closing, for the purpose of dust proof, the space between the projection portions 12c, 12c (opening portion) provided in the lower half 12 and the reel shaft insertion holes 12b, 12b with the bottom surface 14a, and is moved rearward to open the opening portion of the cassette casing. The positions of the reel shaft insertion holes 12b, 12b provided in the bottom surface 12a of the lower half 12 and the reel shaft insertion holes 14b, 14b provided in the bottom surface 14a of the slider 14 coincide with each other so that the tape loading device of the recording/reproducing apparatus and the reel shafts may be inserted.

That is, when the magnetic tape cassette is loaded into the recording/reproducing apparatus, the slider 14 is retracted automatically rearward by the action of the device within the recording/reproducing apparatus, but in no use of the cassette, the slider is moved forward by means of the slider spring 22.

Not-shown reel shaft coupling holes for inserting and thereby coupling with the reel shafts provided in the recording/reproducing apparatus for rotating and driving the respective takeup hubs 26 are provided in the lower end portion of the takeup hubs 26. As described above, these reel shafts are inserted into the reel shaft coupling holes of the takeup hubs 26 by penetrating through the reel shaft insertion holes 14b, 12b provided in the slider 14 and the lower half 12. Then, these are coupled with the takeup hubs 26 thereby drivingly rotating the latter to wind the magnetic tape 24 around one of the takeup hubs.
Accordingly, the magnetic tape 24 drawn out from the other takeup hub is brought into contact with the magnetic head of the recording/reproducing apparatus in the tensioned and exposed portion 24a of the magnetic tape to thereby record information onto the magnetic tape or reproduce the information from the magnetic tape.

The magnetic tape 24 wound around the takeup hubs 26 is received between the upper half 10 and the lower half 12 through the upper sheet 36 interposed between the inner wall of the upper half 10 and the magnetic tape 24 and through the lower sheet 34 interposed between the inner wall of the lower half 12 and the magnetic tape 24.

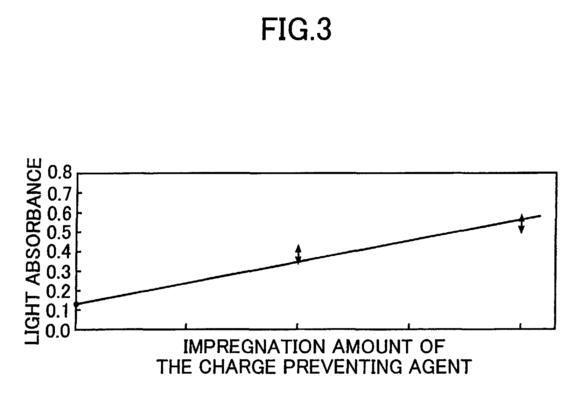

The sheet that is the feature of the magnetic tape cassette according to a first aspect of the present invention will now be described mainly referring to Figs. 2 and 3 in detail.

These upper and lower sheets 36, 34 are positioned by inserting into their respective holes 36a, 34a ribs (pins) of the half 12 for positioning indicated by reference numeral 12d as shown in Fig. 1. Also, the upper and lower sheets 36, 34 have two shaped portions 40, 38, respectively, in the longitudinal direction of the cassette. The upper and lower sheets 36, 34 serve to hold and protect the magnetic tape, but also to decrease the sliding resistance generated when the takeup hubs 26 are rotated in order to smoothen the rotation, and to support the magnetic tape 24 and the takeup hubs 26 around which the magnetic tape 24 is wound by means of the above-mentioned shaped portions 40, 38 to control the height.

The shape of the upper and lower sheets 36, 34 is not particularly limited as far as the shape is substantially the same in size as, or slightly larger than, the maximum winding diameter of the magnetic tape 24 wound around the takeup hubs 26 and may be received in the cassette casing.

In the foregoing example, the upper and lower sheets 36, 34 are positioned by inserting through the holes 36a, 34a the positioning ribs of the lower half 12 indicated by the reference numeral 12d in Fig. 1. However, the present invention is not limited thereto. The positioning of the sheet may be performed with a plurality of holes. The ribs for positioning may be provided on the upper half 10. Also, the sheet may be positioned by a method other than that effected by the insertion of the ribs into the holes. For example, walls formed in conformity with the shape of the upper and lower sheets may be provided on the inner walls of the upper and lower halves for positioning.

Also, in the foregoing example, the upper and lower sheets 36, 34 respectively have the two shaped portions 40, 38 in the longitudinal direction of the cassette. However, the present invention is not limited thereto. It is possible to take any form therefor as far as the shaped portions may serve to support the magnetic tape 24 and the takeup hubs 26 and to limit the height. It is possible to provide two or more shaped portions. Further, it is possible to have the shaped portion in a lateral direction, and the shaped portion may have other shapes. Also, the sheet having no shaped portions may be used.

The material for the upper and lower sheets 36, 34 is not particularly limited as far as, as described above, the sheets may hold and protect the magnetic tape 24, decrease the sliding resistance generated when the takeup hubs 26 are rotated in order to smoothen the rotation, and be provided with the shaped portions 40, 38 for supporting the takeup hubs 26 if necessary. In view of the slidability with the magnetic tape 24 and the elasticity, it is preferable that the sheet be formed of polyethylene (PE) and it is particularly preferable to use high density PE. Also, in order to realize the above-described functions, it is preferable that the upper and lower sheets 36, 34 be formed of porous material.

A charge preventing agent 32 is impregnated into the entire surface or one surface of the lower sheet 34. Here, the impregnation means impregnating the charge preventing agent 32 into the lower sheet 34 made of porous material to be contained therein.

As the charge preventing agent 32, it is possible to point out, for example, a mixture containing four-class ammonium salt.

The amount of the charge preventing agent 32 to be impregnated into the lower sheet 34 must have solid effective component of 2.0 × 10⁻⁵mg/mm² to 1.5 × 10⁻⁴mg/mm², preferably, 5.0 × 10⁻⁵mg/mm² to 1.2 × 10⁻⁴mg/mm². The reason for this is that if the amount is less than 2.0 × 10⁻⁵mg/mm², the surface electric resistance of the lower sheet 34 is increased so that the problem of sticking of the dust or the like due to the charge can not be solved. Further, if it is more than 1.5 × 10⁻⁴mg/mm², it is not preferable because there is a fear that the charge preventing agent 32 to be impregnated into the lower sheet 34 is transferred to the magnetic tape 26 in the case where the magnetic tape cassette is transported, stored or used under severe conditions of high temperature and high humidity that are typical of a climate right on the equator.

Here, as a defining method of the amount of the solid effective component of the charge preventing agent 32 to be impregnated into the lower sheet 34, there may be used, for example, a method for defining by measuring the weight of the contained charge preventing agent 32, a method for defining by performing quantification of the charge preventing agent 32 from the concentration dependency and the wavelength dependency of the absorbance of visible light and ultraviolet ray, a method for defining by performing quantitative analysis of atoms contained in the charge preventing agent 32 and the like.

For example, there may be used, for example, a weight method for measuring the amount of the charge preventing agent processed into the sheet from the difference measured by an electronic balance between the weight of the sheet that has been impregnated with the charge preventing agent and the weight of the sheet from which the charge preventing agent has been evaporated, a UV spectral method of dissolving the charge preventing agent into solution from the sheet that has been processed with the charge preventing agent and measuring the light absorbance by an ultraviolet spectral light analyzer, a gas chromatographic method of burning the sheet that has been subjected to the charge preventing agent impregnation processing, reducing the generated gas into nitrogen gas and counting the amount of the nitrogen gas by an NC analyzer thereby performing the measurement, and the like. Among these, in view of the easiness of measuring in a short period of time, it is most preferable to define the amount of the charge preventing agent in accordance with the UV spectral method.

According to the UV spectral method, the charge preventing agent 32 has an absorption peak in the ultraviolet region in the vicinity of the wavelength of 200 nm.

The present inventors found that the light absorbance had a remarkable non-uniformity in the vicinity of the wavelength of 200 nm and could not obtain high correlation with the amount of the charge preventing agent 32, but found out that it was possible to obtain an excellent correlation upon comparing the light absorbance in the range of wavelength of 205 nm to 225 nm with the amount of the charge preventing agent 32.

Several sets of six lower sheets 34 each containing the same impregnation amount of the charge preventing agent 32 were prepared, and dipped in ethanol, heated in a constant temperature water bath at 65°C for two hours so that the charge preventing agent 32 was dissolved in ethanol, and the light absorbance of this solution at the wavelength of 210 nm was measured by means of the ultraviolet ray spectral meter. The correlation between the light absorbance and the charge preventing agent 32 is shown in Fig. 3. As is apparent from Fig. 3, the correlation between the light absorbance in the vicinity of the wavelength of 210 nm and the impregnation amount of the charge preventing agent 32 was extremely high and the correlation coefficient was 0.96.

That is, in the case where the solid effective component amount of the charge preventing agent 32 is defined in accordance with the UV spectral method, it is preferable to measure it on the basis of the light absorbance in the wavelength range of from 205 nm to 225 nm, more preferably to measure it on the basis of the light absorbance in the wavelength range of from 210 nm to 220 nm.

In the foregoing example, the charge preventing-agent 32 is impregnated in the entire surface or one surface of the lower sheet 34. However, the present invention is not limited thereto. It is sufficient that the charge preventing agent 32 is impregnated into at least one of the upper sheet 36 and the lower sheet 34. Also, any surface of the upper and lower sheets 36, 34 may be impregnated with the charge preventing agent. In view of the more effective prevention of the transfer of the charge preventing agent 32 to the magnetic tape 24, it is preferable to impregnate the charge preventing agent 32 to the surface of the upper and lower sheets 36, 34 that is in contact with the inner wall surface of the upper and lower halves 10, 12.

For example, in case of the magnetic tape cassette shown in Fig. 1, when information is recorded onto the magnetic tape 24 or the information is reproduced from the magnetic tape 24, since the magnetic tape 24 is slidingly moved on the lower sheet 34 disposed on the inner wall surface of the lower half 12, it is preferable that the charge preventing agent 32 is impregnated into the lower sheet 34 interposed between the magnetic tape 24 and the lower half 12, and it is most preferable that the charge preventing agent 32 is impregnated on the surface of the lower sheet 34 that is brought into contact with the inner wall surface of the lower half 12.

As the method of impregnating the charge preventing agent 32 into the lower sheet 34, there may be used a dipping method, a coating method and the like.

### Example

The magnetic tape cassette according to a first aspect of the present invention will now be described more specifically with reference to a specific example.

### <Preparing Sheet>

The charge preventing agent of four-class ammonium salt system was impregnated into a porous sheet made of high density polyethylene as the charge preventing agent, and a sheet processed with the charge preventing agent was prepared such that the solid effective component of the charge preventing agent per unit area was as shown in Table 1.

### <Transfer Test>

In order to see the transfer of the charge preventing agent, which is carried by the sheets obtained in the example and in the comparative examples, to the magnetic tape, the above-described sheet was interposed between the lower half of the magnetic tape cassette shown in Fig. 1 and the magnetic tape with the lower half laid below, and the sheet was left for one week under the environment of a room temperature of 50°C and a relative humidity of 80% and a room temperature of 60°C and relative humidity of 90%. The color change of the magnetic tape was visually evaluated in accordance with the following criteria to inspect the state of transfer of the charge preventing agent to the magnetic tape and the results were shown in Table 1.
ⓞ :no color change in the magnetic tape at all is observed.
○ :almost no color change in the magnetic tape is observed.
X :occurrence of the color change in the magnetic tape is observed.

It is understood that in the sheet provided in the magnetic tape cassette according to the present invention, the charge preventing agent is not transferred to the magnetic tape even in high temperature and high humidity environments.

### <Surface Electric Resistance>

The surface electric resistance values obtained in the examples and in the comparative examples were measured under the conditions of the applied voltage of 500V, the voltage application period of 30 seconds, the temperature of 23±2°C and the relative humidity of 55±5% by means of Hirester high resistance meter (manufactured by Mitsubishi Petrochemical Co. Ltd.). This was evaluated on the basis of the criteria described below and the results were shown in Table 1.
ⓞ :1.0 × 10⁹ Ω or less
○ :1.0 × 10⁹ Ω or more but below 1.0 × 10¹²Ω
X :1.0 × 10¹² Ω or more

It is understood that the sheet provided in the magnetic tape cassette according to the present invention has such features that the surface electric resistance values are small, that is, the surface electric resistance is small, and it holds and protects the magnetic tape and also reduces the sliding resistance generated when the takeup hubs are rotated thereby smoothening the rotation.

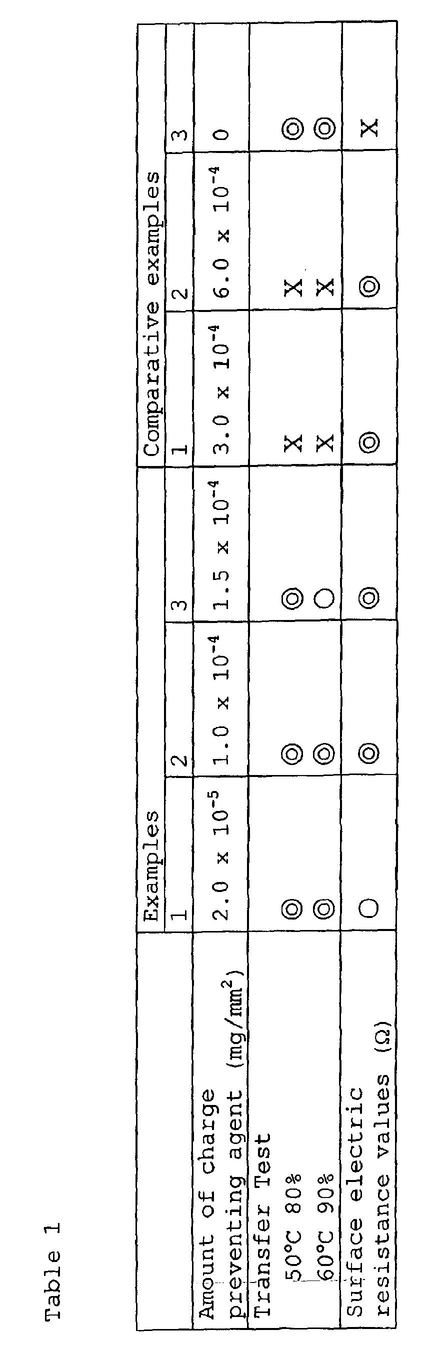

A sheet having features of a magnetic tape cassette according to a second aspect of the present invention will now be described in detail mainly with reference to Fig. 2 and Figs. 4 to 11.

As described above, when the takeup hubs 26 around which the magnetic tape 24 is wound is to be received in the cassette, the upper and lower sheets 36, 34 are interposed on and under the takeup hubs, respectively.

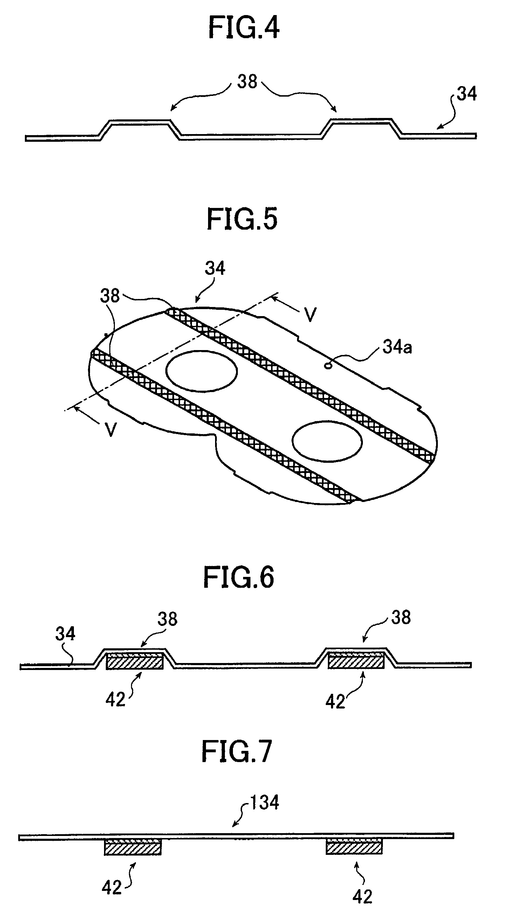

As shown in Fig. 2, both the sheets 34, 36 are positioned by inserting into the respective holes 36a, 34a ribs (pins) of the lower half 12 indicated by reference numeral 12d in Fig. 1. Also, the respective sheets 34, 36 have two shaped portions 38 and 40, respectively, in the right and left directions of the cassette. Each of the shaped portions 38 is formed in a shape having a cross-section along the line III-III as shown in Fig. 4 and supports the takeup hubs 26 from below. This is also the same for the shaped portion 40. Each of the sheets 34, 36 reduces the sliding resistance generated when the takeup hubs 26 rotates, in order to smoothen the rotation, to support the takeup hubs 26 around which the magnetic tape 24 is wound by the above-described shaped portions 38, 40, to define the height and to limit the running position of the magnetic tape.

The sheets 34, 36 shown in Figs. 2 and 4 use a material such as super high molecular PE (including porous material) or PET that is suitable for the sliding motion with the magnetic tape and can be subjected to a shaping process. However, as described above, there is a problem that the material is likely to be deformed in the shaped portion. On the other hand, fluorine system sheet containing Teflon or carbon is difficult to perform shaping.

According to the present invention, the deformation of the shaped portion is prevented in case of the sheet of a material that is easy to shape and at the same time, in order to achieve shaping effect in case of the sheet of a material that is difficult to shape, another separate member is combined with the respective sheet materials, to thereby ensure the shaping effect and to reliably limit the tape running position.

That is, in this embodiment, as a separate material, bondable material such as an intermediate paper, a PET film or the like is bonded as a buffer material 42 in conformity with the shape of the shaped portion onto each of the shaped portions 38, on the lower side (lower half side) of the lower sheet 34 by bonding means such as glue or tape, as shown in Fig. 5 and in cross-section in Fig. 6 taken along the line V-V of Fig. 5 in the lower sheet 34 shown in Figs. 2 and 4.

Also, in case of the sheet 134 that is difficult to shape, as shown in cross-section in Fig. 7 in the same fashion as in Fig. 6, the buffering member 42 that is similar to the above-described one is bonded from the bottom side of the sheet 134 by bonding means onto the position where the shaped portion is to be formed.

In any case, the attachment of the lower sheet 34 (134) to the lower half 12 is performed by inserting the rib 12d for positioning the lower half 12 into the sheet mounting hole 34a of the lower sheet 34. The lower sheet is not fixed by bonding or the like to the portion of the lower half 12 but is kept in a floating condition.

Incidentally, in this example, a single rib 12d for positioning and a single hole 34a for sheet mounting are provided. However, the number thereof is not limited to one but may be plural.

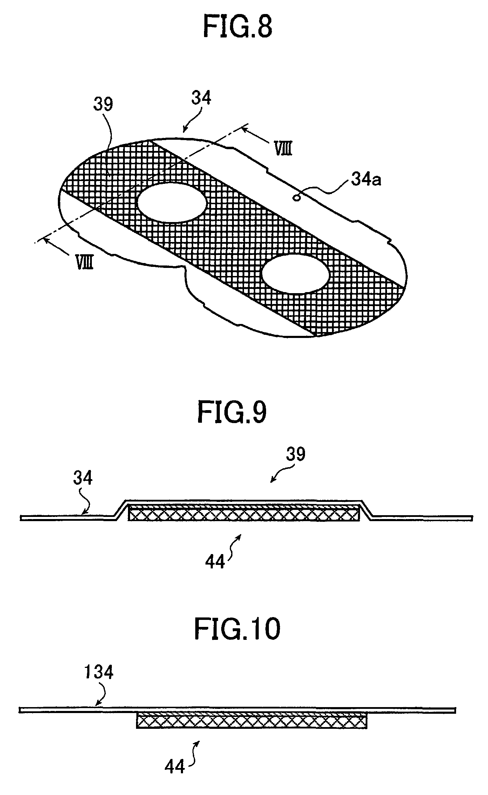

Also, the shape of the shaped portion 38 (or 40) is not limited to that described above. For example, as shown in Fig. 8, the shaped portion 39 may be provided over a wide area including the takeup hubs. In this case, with respect to the sheet 34 of a shapeable material, a buffer material 44 is bonded over the entirety of the lower side of the shaped portion 39 as shown in cross-section (which is the same as that of Fig. 6) in Fig. 9 taken along the line VIII-VIII of Fig. 8. Also, with respect to the sheet 134 of a material that is difficult to shape, as shown in cross-section in Fig. 10 in the same manner, the buffer material 44 is bonded from the lower side of the sheet 134 over the entire area where the shaped portion is to be provided.

Incidentally, according to the present invention, as in the examples shown, it is preferable to apply the feature of the present invention of combining a separate member with the lower sheet 34 (134) to be interposed between the lower half 12 and the takeup hubs 26. However, the present invention is not limited thereto. It is possible to apply the invention to the upper sheet 36 to be interposed between the upper half 10 and the takeup hubs 26 or to the either one or both of the sheets.

Also, in the case where the present invention is applied to the conventional magnetic tape cassette of the type shown in Fig. 12, the ribs 92 on the bottom surface of the lower half 90 for bonding the sheet are removed and the sheet in which the buffer material is bonded over the entire portion to be shaped, which constitutes the feature of the second aspect of the present invention, is mounted on the lower half in a floating manner without being bonded to be completely fixed.

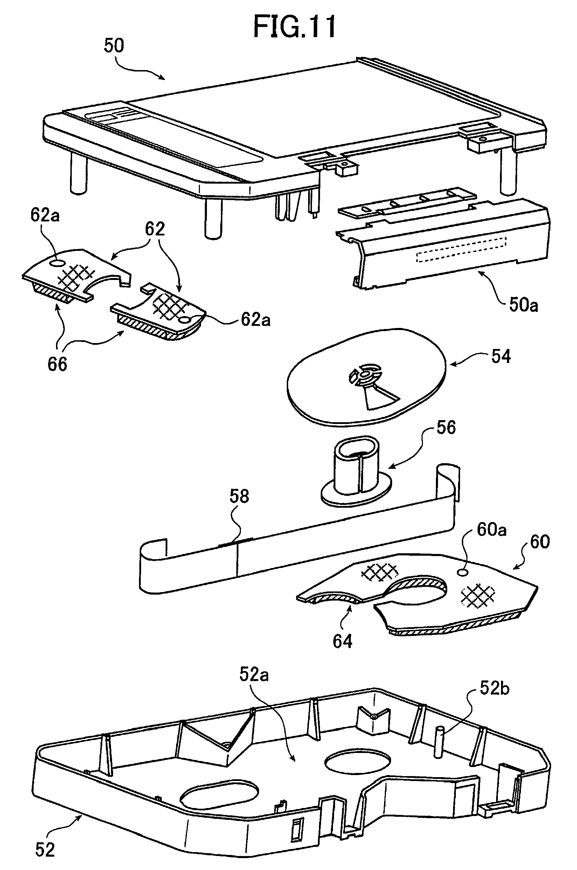

Fig. 11 shows an exploded perspective view of a schematic overall view of such a type of the magnetic tape cassette. In the magnetic tape cassette shown in Fig. 11, the magnetic tape 58 wound around the takeup hubs only one of which has a flange is received between the upper half 50 and the lower half 52 which constitute the cassette body. Here, only the upper flange 54 and the takeup hub 56 are shown and the lower flange and the takeup hub thereof are not shown. Accordingly, the sheet is interposed on the side without the flange. Also, a guard panel 50a (corresponding to the front cover) for protecting the magnetic tape to be exposed from the front surface of the cassette is provided on the front surface side of the upper half 50.

A lower sheet 60 is interposed between the magnetic tape 58 wound around the takeup hubs 56 and the bottom surface 52a of the lower half 52. A buffer material 64 that is substantially the same as that described above is bonded onto the lower sheet 60 in the portion thereof where the shaping effect is to be realized on the lower side. The lower sheet 60 has a sheet mounting hole 60a and the lower sheet 60 is mounted on the lower half 52 by inserting the hole 60a into the rib 52b provided on the bottom surface 52a of the lower half 52. Accordingly, the sheet is not bonded to be fixed as in the conventional art but may be kept in a floating condition. Incidentally, also here, the number of the rib 52b and the sheet mounting hole 60a or the like is not limited to one. A plurality of these components may be used.

Also, on the upper half 50, an upper sheet 62 in which a similar buffer material 66 is bonded in the same manner to the portion of the sheet where the shaping effect is to be realized on the back surface (upper half side) is attached to the upper half bottom surface in which the rib for sheet mounting is removed. This attachment is also performed by inserting the rib (not shown) provided in the bottom surface of the upper half 50 into the sheet mounting hole 62a provided in the upper sheet 62.

As described above, according to the present embodiment, the buffer material is bonded by means of the bonding means to the shaping portion or the portion, where the shaping portion is to be provided, of the sheet to be interposed between the takeup hubs around which the magnetic tape is wound and the half, and the sheet is mounted on the half in the floating condition by inserting the sheet positioning rib of the half into the sheet mounting hole.

Therefore, it is possible to give the shaping effect also with respect to a material in which it is conventionally difficult to provide a shaping portion, so that the range of materials to be used for the sheet for sliding with the magnetic tape, which requires shaping, can be expanded. Also, it is possible to obtain the slidability with the magnetic tape without adversely affecting the increase of the weight of the half, the moldability and the dimensional precision (including the deformation).

Also, it is possible to ensure the stable height of the contact surface (the shaping portion or the portion having the similar function to which the buffer material is bonded) with the magnetic tape and to reliably secure the running position of the magnetic tape.

Furthermore, the buffer material is bonded whereby a cushion effect is ensured against the shock and the magnetic tape may be protected against the shock. In the case where the ribs for sheet bonding (convex) are provided on the lower half of the bottom surface and the sheet is attached as in the conventional case, it is impossible to expect such a cushion effect.

The various embodiments have been described in detail with respect to the magnetic tape cassette of the present invention. However, the present invention is not limited to the various embodiments described above. It is of course possible to make various modifications or changes within the range not departing from the gist of the present invention.

### INDUSTRIAL APPLICABILITY

As described above in detail, according to the first aspect of the present invention, it is possible to reduce the surface electric resistance of the sheet and to prevent the transfer of the charge preventing agent to the magnetic tape even under severe environments such as a high temperature and high moisture condition. Therefore, it is possible to provide stable tape running even after transportation or storage of the magnetic tape under such environments.

Also, according to the second aspect of the present invention, it is possible to limit the positions of the takeup hubs of the magnetic tape in the height direction and to reliably keep the running position of the magnetic tape with high precision.

## Claims

1. A magnetic tape cassette comprising:
a box-shaped cassette casing formed by coupling an upper half and a lower half in a lid alignment manner;
a takeup hub which is rotatably retained within said cassette casing and around which a magnetic tape is wound; and
a sheet to be interposed between an inner wall surface of at least one of said upper half and said lower half of said cassette casing and said magnetic tape wound around said takeup hub, and impregnated with charge preventing agent at 2.0 × 10⁻⁵ mg/mm² to 1.5 × 10⁻⁴ mg/mm² on at least one surface thereof.

2. A magnetic tape cassette according to claim 1, said sheet being a sheet interposed at least between said magnetic tape wound around said takeup hub and said inner wall surface of said lower half.

3. A magnetic tape cassette according to claim 1 or 2, an impregnation amount of said charge preventing agent into said sheet being defined by at least one of a UV spectral method and a gas chromatographic method.

4. A magnetic tape cassette in which a pair of takeup hubs around which a magnetic tape is wound is received in a cassette casing formed by coupling an upper half and a lower half in a lid alignment manner and sheets are interposed between said takeup hubs and said upper half and said lower half, respectively,
a buffer member for keeping and giving a shaping effect being bonded by bonding means to at least one of said sheets in a portion provided with a shaped portion for limiting a position of the takeup hubs in a height direction or in a portion where the shaped portion is to be provided.

5. A magnetic tape cassette according to claim 4, at least one of said sheets being mounted in a floatable condition to at least one of said upper half and lower half.

6. A magnetic tape cassette according to claim 4 or 5, at least one of said sheets being a sheet interposed between the magnetic tape to be wound around said takeup hubs and an inner wall surface of said lower half.
